Europäisches Patentamt

European Patent Office

Office européen des brevets

(19)

(11) Publication number: **0 509 264 A2**

## EUROPEAN PATENT APPLICATION

(12)

(21) Application number: **92104814.6**

(22) Date of filing: **19.03.92**

(51) Int. Cl.5: **B29C 45/60**

(30) Priority: **16.04.91 JP 83941/91**

(43) Date of publication of application:
**21.10.92 Bulletin 92/43**

(84) Designated Contracting States:
**DE FR GB IT**

(71) Applicant: **Amano, Osamu**
**25-6, Hongodai 5-chome, Sakae-ku**
**Yokohama-shi, Kanagawa-ken(JP)**

(72) Inventor: **Amano, Osamu**
**25-6, Hongodai 5-chome, Sakae-ku**
**Yokohama-shi, Kanagawa-ken(JP)**

(74) Representative: **Strehl, Schübel-Hopf,**
**Groening**
**Maximilianstrasse 54 Postfach 22 14 55**
**W-8000 München 22(DE)**

(54) **Molding machine.**

(57) A molding machine is equipped with a screw which is intermittently and/or periodically rotatable to plasticate a resin. The screw is a barrier flight screw having a main flight and an auxiliary flight. The main flight and auxiliary flight define a melt channel and a solid channel. The depth of the latter is deeper than 50% of the former.

EP 0 509 264 A2

## BACKGROUND OF THE INVENTION

### 1) Field of the Invention

This invention relates to a molding machine with a screw intermittently and/or periodically rotatable to plasticate a thermoplastic resin as in injection molding, blow molding or the like, and especially to the shape and dimensions of the screw.

### 2) Description of the Related Art

There are certain requirements for molding machines in which a screw is intermittently and/or periodically rotated to plasticate a thermoplastic resin as in injection molding, blow molding or the like. First, the temperature of the resin so plasticated should conform to the temperature setting of a heating cylinder and, moreover, should not vary within a shot (inter-shot) or from shot to shot (intrashot). In other words, a constant in temperature is required. Second, intrashot and intershot, uniformity in composition is required. This is governed almost entirely by the mixing performance of the screw. Third, it should be possible to plasticate as large an amount of the resin as possible in a short time. This depends upon the plasticating ability of the screw.

The performance of a molding machine is determined by how well the molding machine can meet these three requirements. It is fairly well known to both users and manufacturers of molding machines that a screw adapted to plasticate a resin plays a primary role in determining the performance. Therefore, tremendous efforts have been concentrated to date on the development of these screws.

However, regarding the first requirement for the temperature uniformity, it is very difficult to accurately measure the temperature of a molten resin in unsteady state because the molten resin has both a very low thermal conductivity and a very high melt viscosity. Measurement of the temperature of a molten resin intermittently and/or periodically injected or extruded from a molding machine as in injection molding or blow molding, therefore, still remains as an unsolved problem.

In extrusion where a resin is plasticated by continuously rotating a screw, variations in resin temperature along the axis of the screw (i.e., time axis) are known to be mere temperature variations rather than temperature distribution inherently caused by the shape of the screw.

Hence, the current situation is that, in a molding process where a screw is rotated in a noncontinuous manner, no screw has been designed and manufactured to the full satisfaction of users' demands and, as a matter of fact, neither users nor molding machine manufacturers have accurately ascertained the true nature of the problem. The present inventor developed a novel method for measuring the temperature of a molten resin within a shot in a dynamic state of injection by using a thermocouple arranged in a nozzle of the molding machine [Journal of Japan Polymer Processing Society: Seikei Kako ,**1**(4), "Measurement of Temperature and Pressure of Resin under Molding" (1989)]. It is known that the temperature of the flowing melt as determined by a sensor such as a thermocouple is considerably different from the temperature of the same resin as measured in a stationary state under atmospheric pressure. Similarly to gases, it is therefore essential to compare each resin temperature after converting it to a corresponding resin temperature in a standard state where the molten resin is maintained in a stationary state under atmospheric temperature.

According to the method described above, a molten resin is standardized into the standard state where the molten resin is in a stationary state under atmospheric pressure, so that corrected temperature and temperature distribution of the molten resin can be obtained. This has made it possible for the first time to conduct an accurate comparison in performance between various screws on the basis of the levels in temperature uniformity of molten resins plasticated by the screws.

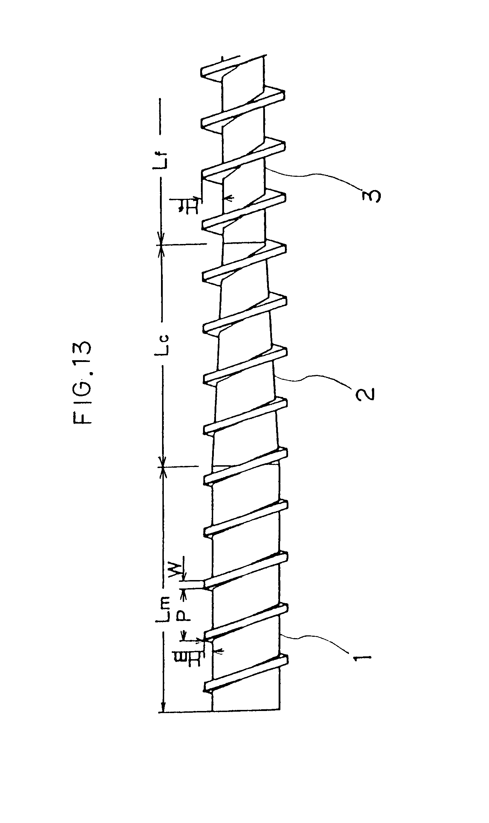

Incidentally, most of the screws employed in injection or blow molding machines are full flight screws (Screw No. 10) which are constructed of a feed section 3, a compression section 2 and a metering section 1 as illustrated in FIG. 13.

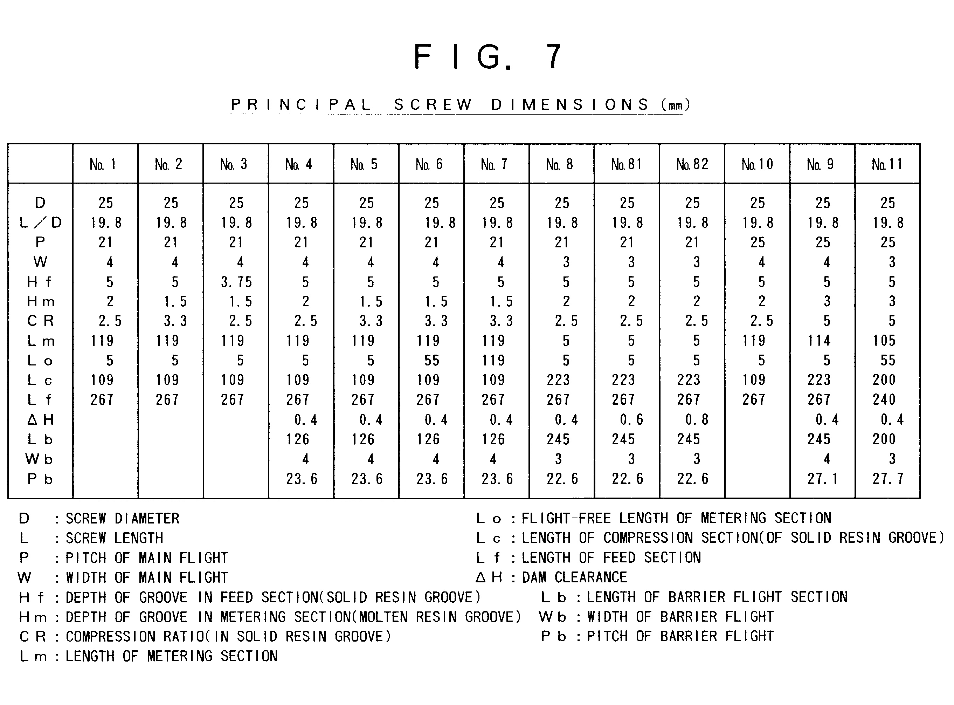

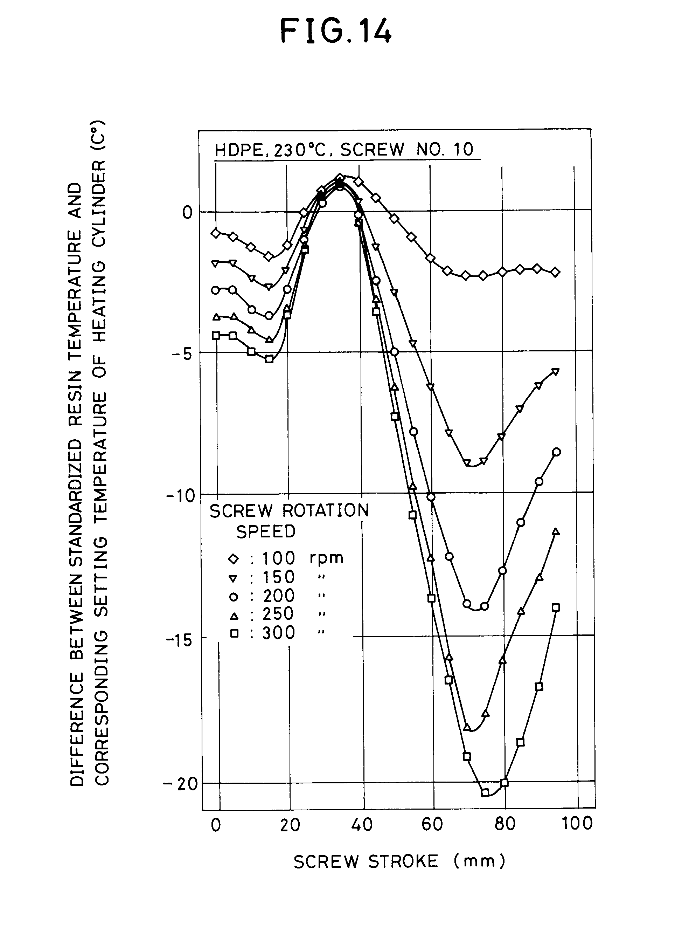

FIG. 14 shows the effects of the rate of screw rotation on temperature distribution curves obtained with Screw No.10 in the dynamic steady-state of injection. The temperature distribution curve can be obtained by normalization of the temperature profile to the standard temperature profile which is that of the first shot of injection as well as uniform in temperature of the melt stored in the reservoir of the heating barrel. The dimentions of various parts of Screw No.10 are tabulated in FIG. 7. High-density polyethylene (HDPE) is employed as the resin.

At a slow screw rotation speed of 100 rpm, although a high temperature zone appears in the first half of the screw stroke and a low temperature zone appears at the last half of the screw stroke, the temperature of the melt remains relatively close to the temperature setting of the heating cylinder and the amplitude of the temperature distribution along the screw axis is narrow. This temperature distribution, however, becomes broader as the screw rotation speed increases, and reaches as much as 20 °C or more at a screw rotation speed of 300 rpm.

As has been described above, a molding machine equipped with such a conventional screw tends to give a broad temperature distribution of the melt.

Upon molding a resin, a broad temperature distribution of the melt within a shot of injection is undesirable in view of the quality of a molded article to be molded. If the screw rotation speed is lowered to make the temperature distribution narrower as described above, the plasticating rate is lowered, leading to a reduction in productivity.

As is appreciated from the foregoing, conventional molding machines have the problem that any attempt to retain high productivity results in the formation of a melt having a broad temperature distribution and thus makes it difficult to mold a high quality molded article.

This has remained a long standing, unsolved problem for the manufacturers of molding machines. This problem has so far been dealt with by reducing the plasticating rate in order to make the temperature distribution narrower or by conducting molding work without taking the temperature distribution into consideration at the potential sacrifice of the quality of molded articles so formed. In the past where no systematic and comprehensive research was conducted with respect to any possible correlation between the shape of a screw and the temperature of a melt plasticated by the screw, it was not easy to design a screw which could provide a high plasticating rate and also a uniform melt temperature within each shot and between shots (inter-shot and intra-shots).

## SUMMARY OF THE INVENTION

In view of the foregoing conventional problems, the present invention has as a primary object the provision of a molding machine capable of providing a high plasticating rate while maintaining a narrow melt temperature distribution.

Based on the above-described novel method to measure the melt temperature developed by the present inventor, a variety of research was conducted on screws having various shapes and dimensions by measuring melt temperature distributions within a shot of injection along the axis of the respective screws.

To attain the object described above, the present invention provides a molding machine with a screw intermittently and/or periodically rotatable to plasticate a resin. The screw is a barrier flight screw having a main flight and an auxiliary flight. The main flight and auxiliary flight define a melt channel and a solid channel, and the melt channel has a depth at least 50% of the depth of the solid channel in a feed section.

Although the aforementioned object can be achieved by the above molding machine, it is preferred for even better results that the length of an axial range of the barrier flight screw, in which the auxiliary flight is provided, is at least 7 times the diameter of the barrier flight screw.

Preferably, the auxiliary flight has a height at least 0.3 mm but less than 1 mm lower than the main flight.

The main flight, preferably, has a pitch at least 0.9 times the diameter of the barrier flight screw.

According to the present invention, it is possible to narrow the temperature distribution of a melt within a shot in the dynamic steady-state of injection without lowering the plasticating rate of the resin and also to reduce variations in resin temperature between shots, thereby making it possible to achieve higher quality and accuracy while retaining the productivity of molded articles.

## BRIEF DESCRIPTION OF THE DRAWINGS

FIG. 1 is a fragmentary side view of a screw (Screw No. 9) according to one embodiment of this invention;

FIG. 2 is a fragmentary side view of a screw (Screw No. 1) according to a referential example for this invention;

FIG. 3 is a fragmentary side view of a screw (Screw No. 4) according to another referential example for this invention;

FIG. 4 is a fragmentary side view of a screw (Screw No. 6) according to a further referential example for this invention;

FIG. 5 is a fragmentary side view of a screw (Screw No. 8) according to a still further referential example for this invention;

FIG. 6 is a fragmentary cross-section of a molding machine;

FIG. 7 is a table showing the dimensions of principal parts of various screws;

FIG. 8 is a table showing conditions for conducting resin-temperature-dependent performance evaluation tests of various screws;

FIG. 9 is a table giving the results of the resin-temperature-dependent performance evaluation tests of the various screws;

FIG. 10 is a diagrammatic representation of temperature distribution of the melt plasticated by various screws;

FIG. 11 is a diagrammatic representation of resin temperature distribution of the melt plasticated by Screw No. 9 at various rotary speeds according to the embodiment of this invention;

FIG. 12 is a diagrammatic representation of a relationship between the ratio of the melt channel and the feed channel (Hm/Hf) and corresponding temperature increases of the melt;

FIG. 13 is a fragmentary side view of a conventional screw (Screw No. 10); and

FIG. 14 is a diagrammatic representation of temperature distribution of the melt plasticated by Screw No. 10 at various rotation speeds.

## DETAILED DESCRIPTION OF THE PREFERRED EMBODIMENTS

Using screws of various dimensions and shapes in addition to the conventional screw, i.e., Screw No. 10, temperature distributions of the melts along the axes of the screws were measured, followed by their study in various ways. As a result, it has been found that the temperature distribution of the melt plastcated by the conventional screw, Screw No. 10, as described above can be attributed to the following causes.

The high temperature zone at the first half of the screw stroke is believed to be attributable to a temperature increase caused by the generation of heat due to shear forces applied as a result of rotation of the screw when transferring the melt from the metering section of the screw to the reservoir of the heating cylinder in the immediately-preceding molding cycle. On the other hand, the low temperature zone at the last half of the screw stroke appears to occur because a resin - whose temperature has not arisen sufficiently due to its insufficient preheating as a result of the stay in a low temperature zone of the heating cylinder, this zone extending from the compression section to the feed section of the screw, in the immediately preceding molding cycle - cannot be heated upto the temperature setting of the heating cylinder although the temperature of the resin has risen during passing through the metering section of the screw.

In general, if all that is required is simply to raise the temperature of a resin, this can be easily achieved by converting energy to heat in the melt. This is actually done by raising the back pressure on a screw in addition to the feeding of heat by transfer, i.e., by conduction. In contrast, there is no method other than thermal conduction to decrease the temperature of the melt which has already been heated. It is hence very difficult to decrease the temperature of the melt.

With the foregoing in mind, it was initially decided to add an auxiliary flight in the present invention with a view toward eliminating the low temperature zone. An auxiliary flight is effective in preventing transfer of non-molten resin lumps (breakup of the solid-bed) from the solid channel to the melt channel of the screw used as well as heating up of the melt passing through the dam clearance between the tip of the barrier flight and the inner surface of the heating barrel.

The mere addition of such an auxiliary flight, however, results in a further temperature increase in the high temperature zone so that the temperature distribution becomes undesirable for molding. It is especially necessary to avoid, as much as possible, the excessive temperature increase of the melt in the high temperature zone to exceed the temperature setting of the heating cylinder because this increases the risk of thermal decomposition of the resin.

Thus, it has also been decided to set the ratio of the depth of the melt channel in the metering section to the depth of the solid channel which is the depth of the feed channel of the screw without the auxiliary flight (hereinafter called the "barrier flight")(Hm/Hf) at 0.5 or greater in this invention. By making the melt channel deeper as mentioned above, the generation of heat due to shear forces generated by rotation of the screw - said heat generation being the cause for the occurrence of the high temperature zone - can be reduced, thereby making it possible to eliminate the high temperature zone. By adding a barrier flight and also setting the channel depth ratio at 0.5 or greater as described above, the object of the present invention can basically be achieved. For a still narrower temperature distribution and a still higher plasticating rate, it is preferable, as mentioned above, to set the length of an axial range of the screw, in which the barrier flight is provided, at 7 times or more the diameter of the screw; to make the height of the barrier flight at least 0.3 mm but less than 1 mm lower than the main flight; and further to set the pitch of the main flight at least 0.9 times the diameter of the screw.

Each of these requirements fundamentally contributes towards a higher plasticating rate. A higher plasticating rate makes it possible to perform the transfer of the melt from the screw to the reservoir in a shorter time, whereby the temperature increase of the melt can be reduced. Fulfillment of all the above requirements, therefore, permits high-level realization of the reduction of the amplitude of the temperature distribution and the increase of the plasticating rate.

As a result of tests on the conventional screws, it has been found that, as described above, the amplitude of the temperature distribution varies significantly depending on the screw rotation speed, and high and low temperature zones occur in the first and last halves of the screw stroke, respectively. The foregoing results show, that from the relationship between each screw stroke and the volume of the screw channels, this relationship being indicative of the volume of an injected melt, it can be quantitatively estimated that the high temperature zone in the first half of the screw stroke corresponds to the melt stored in the channel in the metering section of the screw while the low temperature zone in the last half of the screw stroke corresponds to the melt stored in the screw channel in the compression section and its downstream section of the screw. As to the temperature distribution, it is, however, unknown which part or parts of the screw have an affect on the governing of the temperature of the resin.

A plurality of screws, different in shape and dimensions were, therefore, produced on a trial basis. The temperature distribution within a shot in the dynamic steady-state of injection was measured for the screws with different designs. These screws were compared to one another with respect to the temperature distribution. These screws will hereinafter be described by referring to screws according to the present invention as "embodiments" and to the other screws as "referential examples".

A description will now be made of the outline of equipment used for the test and also of molding conditions followed in the test.

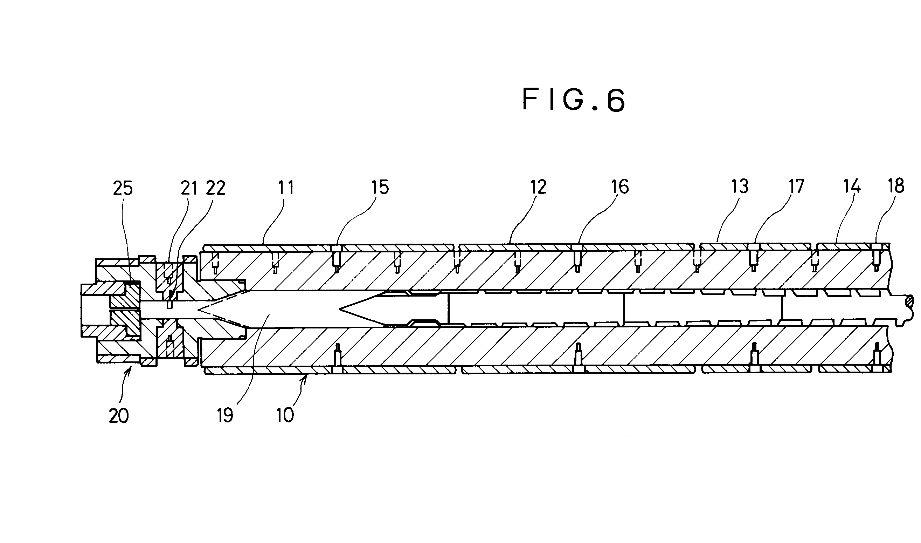

The test was conducted by an injection molding machine ("UN-50", trade name; manufactured by Niigata Engineering Co., Ltd.) modified partly, which was shown in FIG. 6. The screws of the various shapes therein as illustrated in FIG. 6 were installed to this machine. A heating cylinder 10 of the injection molding machine was provided with thermocouples 15,16, .... which were adapted to measure temperatures in a front section 11, middle section 12, rear (front) section 13 and rear (rear) section 14 of the heating cylinder 10. In addition, a nozzle 20 was provided with a thermocouple 21 for measuring the temperature of the nozzle 20 itself and also with another thermocouple 22 for measuring the temperature of the melt injected from the reservoir 19. The nozzle 20 is also provided with a capillary die 25 which defined a capillary of 1 mm in diameter and 20 mm in length to make the flow path resistance constant during injection.

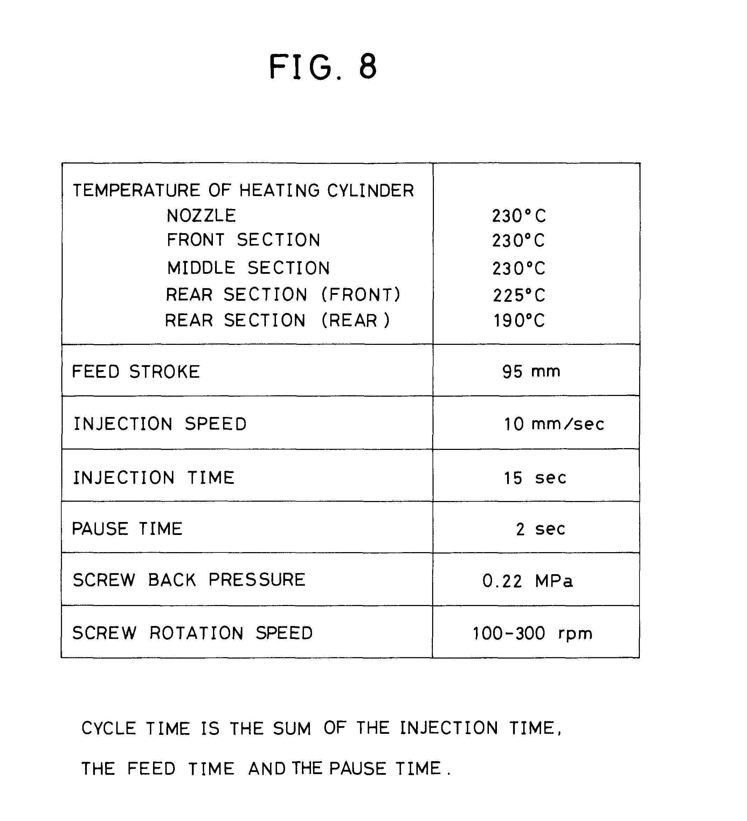

Injection conditions were set as shown in FIG. 8. For example, the temperature setting of the front section 11 of the heating cylinder 10 was chosen at 230°C. As a resin, high-density polyethylene of the injection molding grade ("STAFLENE E880", trade name; product of Nippon Petrochemicals Co., Ltd.) was used.

Upon measurement, the molding machine was left for 30 minutes after the temperatures of the heating cylinder had reached their corresponding temperature settings, whereby the temperature of the melt inside a reservoir 19 of the heating cylinder 20 was made equal and uniform to the temperature of the front section 11 of the heating cylinder 10.

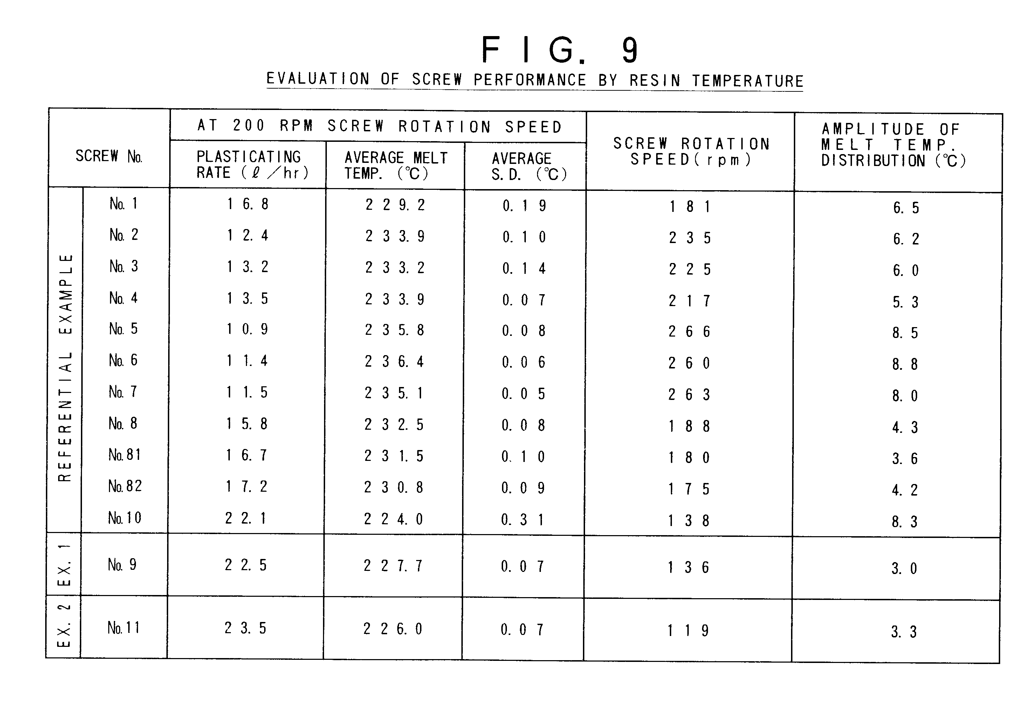

To evaluate the various screws in terms of melt temperature in the test, as shown in FIG. 9, various parameters were determined with respect to each screw. These were a plasticating rate (liters/hour) calculated from the charge time when the screw returned over a predetermined screw stroke (95 mm) in the dynamic steady-state of injection at the rate of screw rotation of 200 rpm, an average melt temperature calculated from twenty temperatures measured at 5 mm intervals along the screw stroke at the screw rotation speed of 200 rpm, and the average of standard deviations indicating inter-shot temperature variations determined by the measurement of those twenty temperatures. To permit an easy comparison between the screws even if the plasticating rate varies substantially depending on the screw design, a screw rotation speed and the amplitude of the temperature distribution (the difference between the highest and lowest melt temperature within a shot in the dynamic steady-state of injection), both when the plasticating rate was standardized to 15 l/hr, are also shown in FIG. 9, with respect to each screw.

Referential Examples

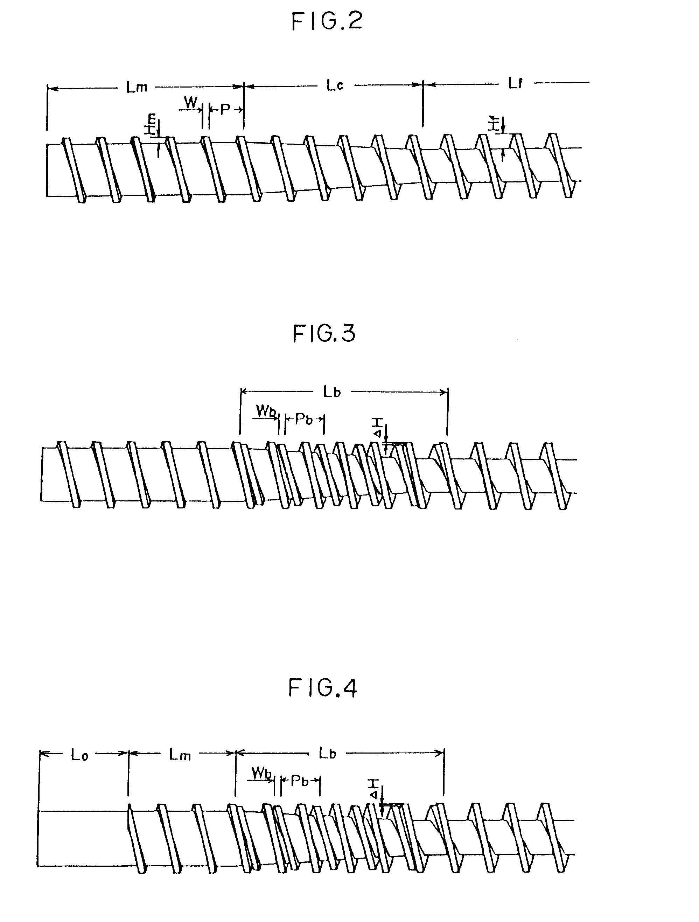

Screw No. 1, a general full flight screw, was tested first. The basic shape of Screw No. 1 is, as shown in FIG. 2, similar to that of Screw No. 10 described above as a conventional screw. The dimensions of respective parts are set as shown in FIG. 7, in which the dimensions of the corresponding parts of various screws are also shown so that they may be compared to one another.

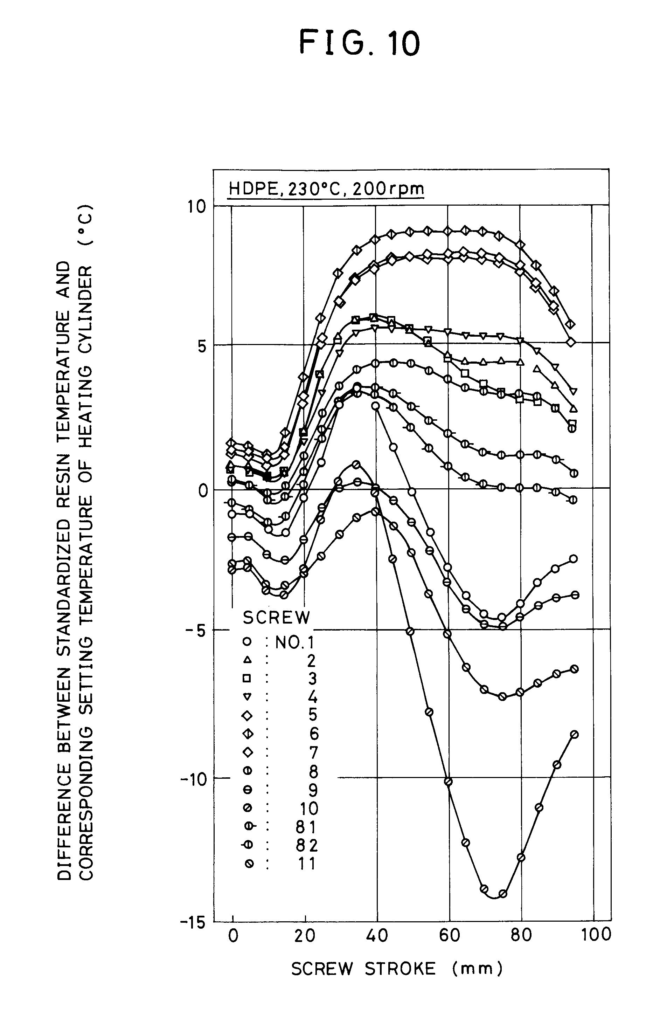

Since Screw No. 1 has a similar basic shape to Screw No. 10, a similar tendency is observed in the temperature distribution when Screw No. 1 is used. As is depicted in FIG. 10, a high temperature zone appears in the first half of the screw stroke and a low temperature zone shows up in the last half of the screw stroke within a shot in the dynamic steady-state of injection. Further, the temperature difference between the high temperature zone and the low temperature zone becomes greater as the rotation speed of the screw increases.

It is Screw No. 2 that was produced on a trial basis with a view toward eliminating the low temperature zone observed with Screw No. 1. In Screw No. 2, the depth Hm of the metering channel was made shallower from 2 mm to 1.5 mm and the compression ratio CR ( = Hf/Hm) was increased to 3.3 so that the resin would be able to easily receive heat from the surrounding heating cylinder 10 while the resin passes through the metering channel of the screw. Further, it is Screw No. 3 that, in order to ascertain any influence by the compression ratio CR of a screw, the compression ratio CR was changed to 2.5 by setting the depth Hf of the feed channel at 3.75 mm.

By making the channel shallower in the metering section of the screw, the low temperature zone in the last half of the screw stroke was indeed eliminated at the investigated screw rotation speed range of 100-300 rpm as shown in FIG. 10. However, the resin temperature in the high temperature zone in the first half of the screw stroke became still higher and at the same time, the charge time required to feed the resin in an amount corresponding to the stroke of 95 mm became longer, thereby leading to a reduction in the plasticating rate.

It is the addition of a barrier flight that seems to be another effective method for the elimination of the low temperature zone. The principal function of a barrier flight is to prevent lumps of non-molten resin from transferring from the solid channel to the melt channel. The barrier flight is also known to be very useful for the prevention of the mixing of breakup of the solid-bed during extrusion. Therefore, in Screw No. 4 and Screw No. 5, a barrier flight 0.4 mm lower than the main flight was introduced to $\Delta H$ to the compression sections of Screw No. 1 and Screw No. 2 respectively, as illustrated in FIG. 3. Similarly to Screw No. 2 and Screw No. 3, these screws are both effective for the elimination of the low temperature zone. It has, however, been found that, as the screw rotation speed is increased, the resin temperature rises further over the entire range of the screw stroke and the plasticating rate is lowered significantly compared to Screw No. 1 and Screw No. 2 as shown in FIG. 9.

As a first cause for the above temperature increase, it is estimated that the barrier flight would probably prevent the movement of the resin in the compression section, thus generating substantial heat under shear forces inside the resin. As a second cause for the temperature increase, there are probably the generation of heat by viscous flow as a result of flow of the melt through the metering section of the screw and also the generation of heat under shear forces as a result of rotation of the screw. Since the generation of heat by viscous flow is governed by the shear rate determined by dimensions of a flow path. It is possible to change the width and length of the flow path by grinding off the flight of the screw. As a result, the increase of the melt temperature may be probably restricted. Turning to the generation of heat under shear forces caused by rotation of the screw, it is expected to reduce the temperature increase of the melt by shortening the charge time.

Hence Screw No. 6 was fabricated on a trial basis to determine whether the temperature increase is predominantly governed by the heat generation caused by viscous flow or by the shear forces as a result of rotation of the screw. Screw No. 6 is, as shown in FIG. 4, similar to Screw No. 5 except for the elimination of the flight over about half the length of the metering section, and Screw No. 7 had the remaining half ground off. As a result, no substantial change was observed in the temperature distribution curve for each screw. On the other hand, a strong correlation was observed between the duration of the charge time and the increase of the melt temperature in the second shot with respect to each screw.

Accordingly, the generation of heat under shear forces as a result of rotation of the screw is believed to be a cause for the high temperature zone in the first half of the screw stroke.

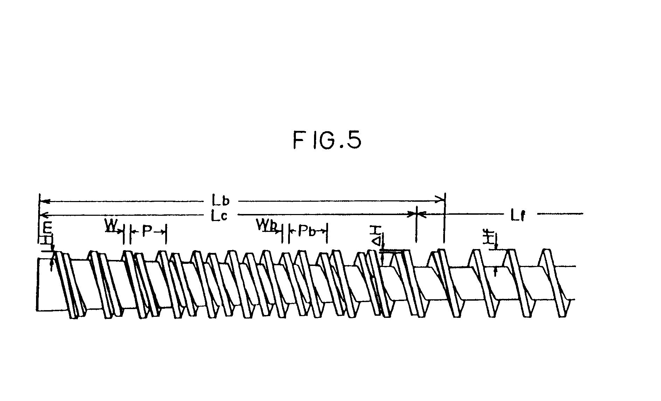

Then to reduce the themperature increase in the high temperature zone, it is necessary to transfer the melt in a short time from the screw to the reservoir, in other words, to increase the plasticating rate. With Screw No. 8, as shown in FIG. 5, the barrier flight range of Screw No. 4 was extended not only to the compression section but also to the metering section in an attempt to increase the plasticating rate.

Compared to Screw No. 1 which is a general full flight screw, substantial improvements are observed in the average standard deviation of the melt temperature and the amplitude of the temperature distribution as depicted in FIG. 9. However, it is not fully satisfied that the average melt temperature ($232.5\,^{\circ}C$) is higher than the temperature setting ($230\,^{\circ}C$) of the heating cylinder and the plasticating rate is slow. In particular, it is necessary to avoid any resin temperature higher than the temperature setting of the heating cylinder as this leads to an increased risk of thermal decomposition of the resin. Since the melt temperature tends to rise with the rate of screw rotation , any melt temperature higher than the setting temperature of the heating cylinder must be avoided whenever a molding machine is operated by setting a high screw rotation speed.

Screw No. 81 therefore had the barrier flight of Screw No. 8 ground off over 0.2 mm to lower its height, namely, the dam clearance $\Delta H$ of Screw No. 8 was expanded to 0.6 mm to permit easy passage of the melt beyond the barrier flight in an attempt to increase the plasticating rate. With Screw No. 82 the barrier flight of Screw No. 8 was ground off over 0.4 mm to lower its height, namely, the dam clearance $\Delta H$ of Screw No. 8 was expanded to 0.8 mm to ascertain influence of the height of the barrier flight.

With both Screw No. 81 and Screw No. 82, as is shown in FIG. 9, an increase in the plasticating rate and a reduction in the average melt temperature were observed in comparison with Screw No. 8 so that further improvements were found. With Screw No. 82, a low temperature zone, however, begins to appear in the rear half of the screw stroke at a high screw rotation speed, thereby demonstrating the existence of an unavoidable limitation to the value of the dam clearance ΔH. Example 1

Taking the results of the above referential examples into parallel consideration, it has been deemed necessary to design a screw in view of the following elements.

First, it is nearly impossible to design a conventional full flight screw - which comprises three sections, namely a feed section, a compression section and metering section and does no have a satisfactory temperature distribution as an injection molding or blow molding screw whose length is limited. Addition of a barrier flight is, therefore, indispensable in order to reduce or eliminate a low temperature zone which tends to occur in the last half of the screw stroke due to the mixing of breakup of solid-bed.

Second, mere addition of such a barrier flight, however, results not only in a substantial reduction in the plasticating rate but also in an abnormal increase in the melt temperature as with Screw No. 4 and Screw No. 5 of the referential examples. It is, therefore, necessary to increase the range with the barrier flight to some extent. As a result of a test conducted by changing the length of the range with the barrier flight, 7D (D: screw diameter) or longer has been found preferable as the length of this range.

Third, it is desirable to set the dam clearance ΔH, which is the difference in height between the main flight and the barrier flight, at a suitable dimension. This is desired because a narrow dam clearance ΔH obstructs the flow of the melt and so reduces the plasticating rate while an excessively wide dam clearance like Screw No. 82 permits the mixing of breakup of the solid-bed from the solid channel into the melt channel and results in an increased likelihood of the occurrence of an abnormal low melt temperature zone in the last half of the screw stroke. As a result of a test conducted by changing the dimension of the dam clearance, the suitable dimensional range of the dam clearance has been found to be at least 0.3 mm but less than 1 mm because of the dimension of the pellets of the resin.

Fourth, it is indispensable to make the melt channel deeper than 50% of the depth of the solid channel in the feed section. It has been ascertained from the relationship between the charge time and the temperature increase of the second shot at the same rotation speed that the melt temperature of the high temperature zone in the first half of the screw stroke is caused by the generation of heat under shear forces as a result of rotation of the screw. The melt channel has, therefore, been deepened to reduce the generation of heat in the melt under shear forces.

The compression ratio CR, which is expressed as the ratio of the channel depth in the feed section to that in the metering section (= Hf/Hm), is usually set at a value of 2 or greater. There is a tendency in order to make the compression ratio rather greater like Screw No. 1 and Screw No. 10, to make the channel shallower in the metering section. Accordingly, the deepening of the melt channel as in the present invention is to swim against the current and cannot be adopted without the scientific corroboration described above.

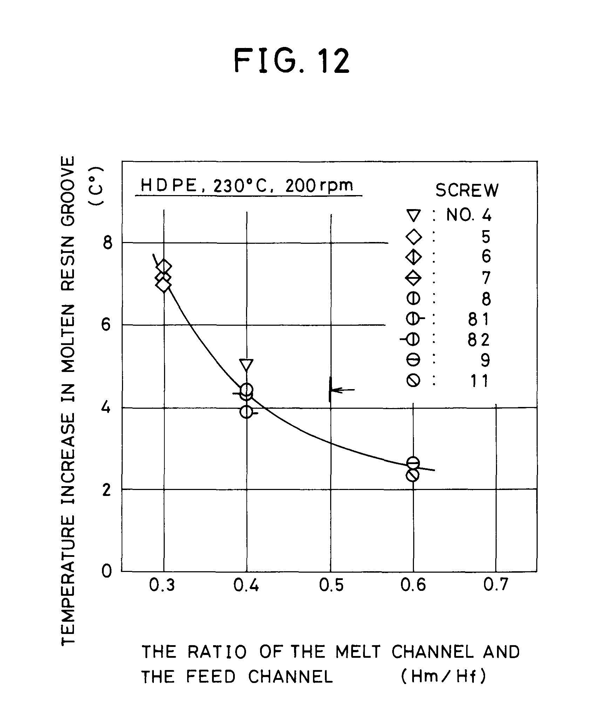

Regarding the depth of the melt channel, a test was conducted to ascertain any correlation between the depth of the melt channel and the increase of the resin temperature. The results are diagrammatically shown in FIG. 12. As is envisaged from FIG. 12, the melt temperature increase remains when the ratio of the depth of the melt channel to the depth of the solid channel in the feed section (Hm/Hf) becomes 0.5 and greater or when Hf/Hm becomes 2 and smaller. It is, therefore, possible to bring about the effects of a deepened melt channel when the channel depth ratio is set at 0.5 or greater. The channel depth ratio is preferably not greater than 1.0 from the view point of the production of the screw.

Fifth, to further increase the plasticating rate and transfer speed of the melt, it is desirable to set the pitch of the main flight at 0.9D or greater. If the screw rotation speed is the same, a lower plasticating rate requires rotation of the screw for a longer time, unavoidably resulting in a higher melt temperature.

It is Screw No. 9 of this invention that was produced with the foregoing in mind.

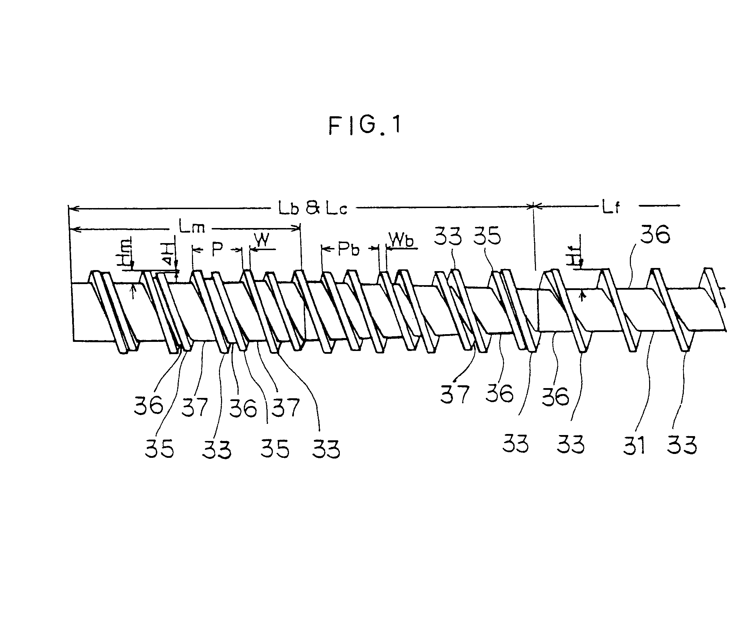

As is illustrated in FIG. 1, Screw No. 9 is a barrier flight screw. The dimensions of respective parts are given in FIG. 7. Namely, the length Lb of the range in which a barrier flight 35 is provided is 245 mm which is more than 7 times the diameter D (= 25 mm) of the screw (Lb/D = 9.8). The dam clearance ΔH is 0.4 mm. The ratio of the depth of the melt channel 37 to the depth of the solid channel 36 in the feed section 31 (= Hm/Hf) is 0.6 which is greater than 0.5 (in terms of Hf/Hm, 1.67 which is smaller than 2). The pitch P of a main flight 33 is 25 mm which is greater than 0.9 times the diameter D (= 25 mm) of the screw (P/D = 1.0).

Screw No. 9, designed in such a shape and dimensions as described above, is superior to Screw No. 10, a conventional screw, in every evaluation item as shown in FIG. 9 and FIG. 10. Screw No. 9 has achieved an increase in the plasticating rate and a reduction in the amplitude of the temperature distribution of the melt. In addition, Screw No. 9 has also realized a reduction in the average standard deviation, which is an index for variations between shots, to a quarter or less of the average standard deviation of Screw No. 10.

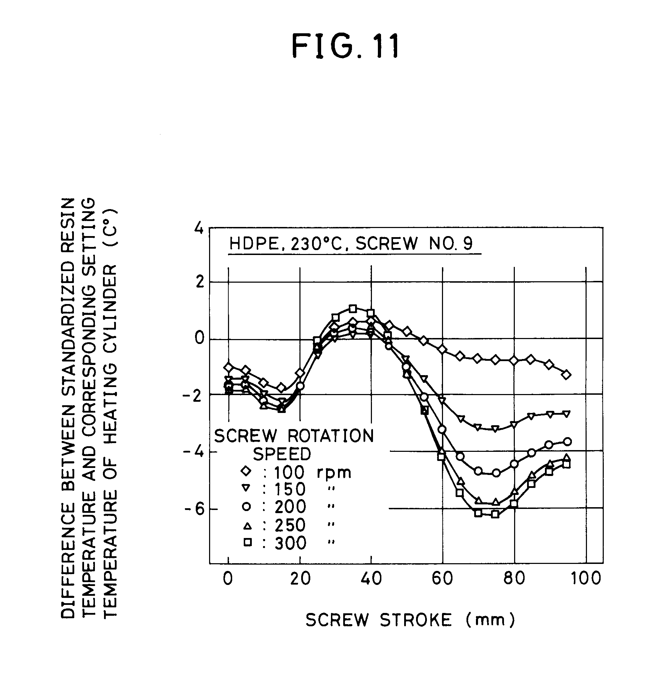

Influence of the screw rotation speed on the temperature distribution can be clearly understood from a comparison between FIG. 11 and FIG. 14. It is appreciated that, in Screw No. 10, the width of the temperature distribution varies considerably when the screw rotation speed increases. But, in Screw No. 9, the amplitude of the temperature distribution varies very little even when the screw rotation speed increases and the highest temperatures within a shot are close to the corresponding setting temperatures and their amplitudes fall within 6°C. It is also understood from FIG. 11 that the average melt temperature decreases with increase of the rate of screw rotation in the case of Screw No. 9, which means that the heat transfer is predominant.

Example 2

Screw No. 11 according to this example has been designed to have a mixing section whose length is 2D. Although any shape of mixing head can be attached to the mixing section, Screw No. 11 is in the form of a simple rod having the same diameter as the melt channel of the screw. Specific dimensions of the screw are given in FIG. 7.

Like Screw No. 9, Screw No. 11 is also superior to Screw No. 10, a conventional screw, in every evaluation item as shown in FIG. 9 and FIG. 10. Screw No. 11 has achieved an increase in the plasticating rate and a reduction in the amplitude of the temperature distribution.

A comparison between Screw No. 11 and Screw No. 9 in each evaluation item described in FIG. 9 indicates that Screw No. 11 is slightly faster in the plasticating rate and is lower in the average resin temperature, reflecting the increase in the volume of the channel of the screw owing to the reduction of the width W of the main flight and the width Wb of the barrier flight.

Two examples which relate to this invention have been described above. They include all the five elements mentioned above and, hence, are the most preferred embodiments. It is to be noted that the amplitude of the temperature distribution can be reduced without reducing the plasticating rate of the resin, namely, the object of the present invention can be attained as long as the first and fourth elements are included.

**Claims**

1. In a molding machine with a screw intermittently and/or periodically rotatable to plasticate a resin, the improvement wherein said screw is a barrier flight screw having a main flight (33) and an auxiliary flight (35), the main flight and auxiliary flight define a melt channel (37) and a solid channel (36), and the melt channel (37) has a depth at least 50% of the depth of the solid channel (36) in a feed section.

2. The molding machine of claim 1, wherein the length of a zone with the barrier flight (35) on the screw along the screw axis, in which the auxiliary flight is provided, is at least 7 times the diameter of the screw.

3. The molding machine of claim 1 or 2, wherein the auxiliary flight (35) has a height at least 0.3 mm but less than 1 mm lower than the main flight (33).

4. The molding machine of any of claims 1 to 3, wherein the main flight (33) has a pitch at least 0.9 times the diameter of the barrier flight screw.

5. The molding machine of claim 1, wherein the length of a zone with the barrier flight (35) on the screw, in which the auxiliary flight is provided, is at least 7 times the diameter of the screw.

6. The molding machine of claim 1, wherein the screw has a diameter of 25.0 mm, and the melt channel has a depth of at least 2.5 mm.

FIG.1

## FIG.2

## FIG.3

## FIG.4

# FIG.5

FIG.6

# F I G. 7

## PRINCIPAL SCREW DIMENSIONS (mm)

| | No. 1 | No. 2 | No. 3 | No. 4 | No. 5 | No. 6 | No. 7 | No. 8 | No. 81 | No. 82 | No. 10 | No. 9 | No. 11 |
|---|---|---|---|---|---|---|---|---|---|---|---|---|---|
| D | 25 | 25 | 25 | 25 | 25 | 25 | 25 | 25 | 25 | 25 | 25 | 25 | 25 |
| L／D | 19.8 | 19.8 | 19.8 | 19.8 | 19.8 | 19.8 | 19.8 | 19.8 | 19.8 | 19.8 | 19.8 | 19.8 | 19.8 |
| P | 21 | 21 | 21 | 21 | 21 | 21 | 21 | 21 | 21 | 21 | 25 | 25 | 25 |
| W | 4 | 4 | 4 | 4 | 4 | 4 | 4 | 3 | 3 | 3 | 4 | 4 | 3 |
| H f | 5 | 5 | 3.75 | 5 | 5 | 5 | 5 | 5 | 5 | 5 | 5 | 5 | 5 |
| H m | 2 | 1.5 | 1.5 | 2 | 1.5 | 1.5 | 1.5 | 2 | 2 | 2 | 2 | 3 | 3 |
| C R | 2.5 | 3.3 | 2.5 | 2.5 | 3.3 | 3.3 | 3.3 | 2.5 | 2.5 | 2.5 | 2.5 | 5 | 5 |
| L m | 119 | 119 | 119 | 119 | 119 | 119 | 119 | 5 | 5 | 5 | 119 | 114 | 105 |
| L o | 5 | 5 | 5 | 5 | 5 | 55 | 119 | 5 | 5 | 5 | 5 | 5 | 55 |
| L c | 109 | 109 | 109 | 109 | 109 | 109 | 109 | 223 | 223 | 223 | 109 | 223 | 200 |
| L f | 267 | 267 | 267 | 267 | 267 | 267 | 267 | 267 | 267 | 267 | 267 | 267 | 240 |
| △ H | | | | 0.4 | 0.4 | 0.4 | 0.4 | 0.4 | 0.6 | 0.8 | | 0.4 | 0.4 |
| L b | | | | 126 | 126 | 126 | 126 | 245 | 245 | 245 | | 245 | 200 |
| W b | | | | 4 | 4 | 4 | 4 | 3 | 3 | 3 | | 4 | 3 |
| P b | | | | 23.6 | 23.6 | 23.6 | 23.6 | 22.6 | 22.6 | 22.6 | | 27.1 | 27.7 |

D : SCREW DIAMETER
L : SCREW LENGTH
P : PITCH OF MAIN FLIGHT
W : WIDTH OF MAIN FLIGHT
H f : DEPTH OF GROOVE IN FEED SECTION(SOLID RESIN GROOVE)
H m : DEPTH OF GROOVE IN METERING SECTION(MOLTEN RESIN GROOVE)
C R : COMPRESSION RATIO(IN SOLID RESIN GROOVE)
L m : LENGTH OF METERING SECTION

L o : FLIGHT-FREE LENGTH OF METERING SECTION
L c : LENGTH OF COMPRESSION SECTION(OF SOLID RESIN GROOVE)
L f : LENGTH OF FEED SECTION
△ H : DAM CLEARANCE
L b : LENGTH OF BARRIER FLIGHT SECTION
W b : WIDTH OF BARRIER FLIGHT
P b : PITCH OF BARRIER FLIGHT

EP 0 509 264 A2

# FIG. 8

| | |
|---|---|
| TEMPERATURE OF HEATING CYLINDER<br>     NOZZLE<br>     FRONT SECTION<br>     MIDDLE SECTION<br>     REAR SECTION (FRONT)<br>     REAR SECTION (REAR) | <br>230°C<br>230°C<br>230°C<br>225°C<br>190°C |
| FEED STROKE | 95 mm |
| INJECTION SPEED | 10 mm/sec |
| INJECTION TIME | 15 sec |
| PAUSE TIME | 2 sec |
| SCREW BACK PRESSURE | 0.22 MPa |
| SCREW ROTATION SPEED | 100-300 rpm |

CYCLE TIME IS THE SUM OF THE INJECTION TIME,

THE FEED TIME AND THE PAUSE TIME.

# F I G. 9

## EVALUATION OF SCREW PERFORMANCE BY RESIN TEMPERATURE

EP 0 509 264 A2

| | SCREW No. | AT 200 RPM SCREW ROTATION SPEED | | | SCREW ROTATION SPEED (rpm) | AMPLITUDE OF MELT TEMP. DISTRIBUTION (℃) |
|---|---|---|---|---|---|---|
| | | PLASTICATING RATE (ℓ/hr) | AVERAGE MELT TEMP. (℃) | AVERAGE S.D. (℃) | | |
| REFERENTIAL EXAMPLE | No. 1 | 1 6. 8 | 2 2 9. 2 | 0. 1 9 | 1 8 1 | 6. 5 |
| | No. 2 | 1 2. 4 | 2 3 3. 9 | 0. 1 0 | 2 3 5 | 6. 2 |
| | No. 3 | 1 3. 2 | 2 3 3. 2 | 0. 1 4 | 2 2 5 | 6. 0 |
| | No. 4 | 1 3. 5 | 2 3 3. 9 | 0. 0 7 | 2 1 7 | 5. 3 |
| | No. 5 | 1 0. 9 | 2 3 5. 8 | 0. 0 8 | 2 6 6 | 8. 5 |
| | No. 6 | 1 1. 4 | 2 3 6. 4 | 0. 0 6 | 2 6 0 | 8. 8 |
| | No. 7 | 1 1. 5 | 2 3 5. 1 | 0. 0 5 | 2 6 3 | 8. 0 |
| | No. 8 | 1 5. 8 | 2 3 2. 5 | 0. 0 8 | 1 8 8 | 4. 3 |
| | No. 81 | 1 6. 7 | 2 3 1. 5 | 0. 1 0 | 1 8 0 | 3. 6 |
| | No. 82 | 1 7. 2 | 2 3 0. 8 | 0. 0 9 | 1 7 5 | 4. 2 |
| | No. 10 | 2 2. 1 | 2 2 4. 0 | 0. 3 1 | 1 3 8 | 8. 3 |
| EX. 1 | No. 9 | 2 2. 5 | 2 2 7. 7 | 0. 0 7 | 1 3 6 | 3. 0 |
| EX. 2 | No. 11 | 2 3. 5 | 2 2 6. 0 | 0. 0 7 | 1 1 9 | 3. 3 |

# FIG. 10

# FIG. 11

DIFFERENCE BETWEEN STANDARDIZED RESIN TEMPERATURE AND CORRESPONDING SETTING TEMPERATURE OF HEATING CYLINDER (C°)

HDPE, 230°C, SCREW NO. 9

SCREW ROTATION SPEED
◇ : 100 rpm
▽ : 150 "
○ : 200 "
△ : 250 "
□ : 300 "

SCREW STROKE (mm)

# FIG. 12

HDPE, 230°C, 200 rpm

SCREW

∇ : NO. 4
◇ : 5
◈ : 6
◇ : 7
⊕ : 8
⊕ : 8 1
⊖ : 8 2
⊖ : 9
⊘ : 11

Y-axis: TEMPERATURE INCREASE IN MOLTEN RESIN GROOVE (C°)

X-axis values: 0.3  0.4  0.5  0.6  0.7

THE RATIO OF THE MELT CHANNEL AND
THE FEED CHANNEL        (Hm/Hf)

FIG.13

EP 0 509 264 A2

# FIG.14